# FASCICULE DE BREVET EUROPEEN

(11) **EP 4 240 514 B1**
(45) Date de publication et mention de la délivrance du brevet: **01.04.2026**
(21) Numéro de dépôt: 21793970.1
(22) Date de dépôt: 27.10.2021
(51) Int. Cl.: B01D 53/047, B01D 53/04

(54) **PROCÉDÉ DE GESTION DE LA DÉFAILLANCE D'UNE UNITÉ DE TRAITEMENT D'UN GAZ PAR ADSORPTION À MODULATION DE PRESSION**
VERFAHREN ZUR VERWALTUNG EINES FEHLERS IN EINER DRUCKWECHSELABSORPTIONSGASBEHANDLUNGSEINHEIT
METHOD FOR MANAGING A FAULT IN A PRESSURE SWING ABSORPTION GAS TREATMENT UNIT

(30) Priorité: 09.11.2020 FR 2011462
(43) Date de publication de la demande: 13.09.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: SILVA, Paulo, 94500 Champigny sur Marne (FR); MONEREAU, Christian, 94500 Champigny sur Marne (FR); MATTHYSSEN, Jan, 2040 Antwerp (BE); MEERMAN, Pascal, 3012 Rotterdam (NL); NELIS, Luc, 2040 Antwerp (BE)
(74) Mandataire: Air Liquide
(86) Numéro de dépôt international: PCT/EP2021/079867
(87) Numéro de publication internationale: WO 2022/096347

(56) Documents cités:
- FR-A1- 2 782 020
- FR-A1- 2 835 932
- FR-A1- 2 865 554

## Description

La présente invention concerne un procédé de gestion d'une unité de traitement d'un gaz par adsorption à modulation de pression (PSA, pour « Pressure Swing Adsorption ») notamment pour produire un flux gazeux enrichi à partir d'un flux gazeux d'alimentation, et plus particulièrement les unités de traitement par adsorption à modulation de pression (unité PSA) mettant en œuvre au moins 6 adsorbeurs. Elle concerne également une unité fonctionnant selon ce procédé.

L'invention trouve une application particulièrement avantageuse, mais non exclusive, avec des PSA H2, O2 ou CO2.

De manière générale, un procédé par adsorption en phase gazeuse permet de séparer une ou plusieurs molécules d'un mélange gazeux les contenant, en exploitant la différence d'affinité d'un ou plusieurs adsorbants pour les différentes molécules constitutives du mélange. L'affinité d'un adsorbant pour une molécule dépend d'une part de la structure et la composition de l'adsorbant et d'autre part des propriétés de la molécule, en particulier sa taille, sa structure électronique et ses moments multipolaires. Un adsorbant peut être par exemple une zéolite, un charbon actif, une alumine activée éventuellement dopée, un gel de silice, un tamis moléculaire carboné, une structure métallo-organique, un oxyde ou hydroxyde de métaux alcalins ou alcalino-terreux, ou une structure poreuse contenant de préférence une substance capable de réagir réversiblement avec les molécules, substance telle que amines, solvants physique, complexants métalliques, oxydes ou hydroxydes métalliques par exemple.

Les matériaux adsorbants les plus classiques sont sous forme de particules (billes, bâtonnets, concassés...) mais existent également sous forme structurée tels les monolithes, roues, contacteurs à passages parallèle, tissus, fibres...

On peut distinguer 3 grandes familles de procédé par adsorption : les procédés à charge perdue, les procédés à modulation de température appelés TSA (Température Swing Adsorption) et enfin les procédés PSA (Pressure Swing Adsorption).

Dans les procédés à charge perdue, on met en place une nouvelle charge lorsque celle en cours d'utilisation est saturée par les impuretés ou plus généralement quand elle ne peut plus jouer son rôle de protection de manière suffisante.

Dans les procédés de type TSA, l'adsorbant en fin d'utilisation est régénéré in situ, c'est-à-dire que les impuretés arrêtées sont évacuées afin que le dit adsorbant récupère l'essentiel de ses capacités d'adsorption et puisse recommencer un cycle d'épuration, l'effet de régénération essentiel étant dû à une élévation de température.

Enfin, dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ ou par balayage avec un gaz exempt ou contenant peu d'impuretés.

Les procédés par adsorption modulée en pression sont utilisés aussi bien pour éliminer des traces d'impuretés, par exemple de teneur inférieure à un pourcent dans le gaz d'alimentation, que pour séparer des mélanges contenant des dizaines de pourcents de différents gaz. Dans le premier cas, on parle généralement d'épuration (par exemple un séchage de gaz) et de séparation dans le second cas (par exemple une production d'oxygène ou d'azote à partir d'air atmosphérique).

FR2865554 Al décrit un procédé de gestion d'une unité de traitement d'un gaz par adsorption à modulation de pression fonctionnant avec un haut niveau de fiabilité et de stabilité, en particulier quand un ou plusieurs adsorbeurs se trouvent momentanément hors service en raison d'une opération de maintenance ou d'un incident imprévu, tel qu'une rupture de vanne.

Dans le cadre de la présente invention, on désigne par le terme PSA, tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle) :
- les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs ;
- les procédés MPSA ou VPSA dans lesquels l'adsorption s'effectue à une pression haute supérieure à la pression atmosphérique, typiquement entre 1.5 et 6 bar abs, et la désorption à une pression basse inférieure à la pression atmosphérique, généralement comprise entre 200 et 600 mbar abs ;
- les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs ;
- les procédés RPSA (Rapid PSA) pour lesquels la durée du cycle de pression est typiquement inférieure à la minute ;
- les procédés URPSA (Ultra Rapid PSA) pour lesquels la durée du cycle de pression est de l'ordre de quelques secondes maximum.

Il convient de noter que ces diverses appellations ne sont pas standardisées et que les limites sont sujettes à variation.

Un adsorbeur va donc commencer une période d'adsorption jusqu'à ce qu'il soit chargé dans le ou les constituants à arrêter à la pression haute puis va être régénéré par dépressurisation et extraction des composés adsorbés avant d'être remis en état pour recommencer une nouvelle période d'adsorption. L'adsorbeur a alors effectué un cycle de pression et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation : temps de phase = temps de cycle / nombre d'adsorbeurs. On voit que le nombre de phases est égal au nombre d'adsorbeurs.

Ce cycle comporte généralement des périodes parmi :
- Production ou Adsorption au cours de laquelle le gaz d'alimentation est introduit par une des extrémités de l'adsorbeur, les composés les plus adsorbables sont adsorbés préférentiellement et le gaz enrichi en composés les moins adsorbables (gaz produit) est extrait par la seconde extrémité. L'adsorption peut se faire à pression montante, à pression sensiblement constante, voire à pression légèrement descendante ;
- Dépressurisation au cours de laquelle l'adsorbeur qui n'est plus alimenté en gaz d'alimentation est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co-courant et contre-courant ;
- Elution ou Purge, au cours de laquelle un gaz enrichi en les constituants les moins adsorbables (gaz de purge) circule à travers le lit d'adsorbant afin d'aider à la désorption des composés les plus adsorbables. La Purge se fait généralement à contre-courant ;
- Repressurisation au cours de laquelle l'adsorbeur est au moins partiellement repressurisé avant de reprendre une période d'Adsorption. La repressurisation peut se faire à contre-courant et/ou à co-courant ;
- Temps mort au cours de laquelle l'adsorbeur reste dans le même état. Ces temps morts peuvent faire partie intégrante du cycle, permettant la synchronisation d'étapes entre adsorbeurs ou faire partie d'une étape qui s'est terminée avant le temps imparti. Les vannes peuvent être fermées ou bien rester en l'état, selon les caractéristiques du cycle.

On connaît des unités de traitement par adsorption à modulation de pression (unités PSA) comportant un nombre N d'adsorbeurs élevé, couramment égal ou supérieur à six mais pouvant dépasser la vingtaine. En effet, la tendance actuelle est de traiter des débits de plus en plus élevés et il s'avère généralement beaucoup plus intéressant d'augmenter le nombre d'adsorbeurs que d'accroître leur volume unitaire. On conçoit que plus une unité comporte d'adsorbeurs, plus le risque que l'un de ses adsorbeurs devienne non opérationnel est élevé.

Il faut prendre ici le mot adsorbeur au sens large, c'est-à-dire avec les équipements qui lui sont directement associés comme des vannes ou de l'instrumentation. Une défaillance portant sur l'un quelconque de ces équipements (adsorbeur lui-même, vannes, instrumentation) va généralement conduire à rendre l'adsorbeur non opérationnel, c'est-à-dire qu'il n'est plus utilisable dans le cycle. Ce risque a été pris en compte dès que les unités de type PSA se sont développées.

Une première solution a été de prévoir un cycle de substitution au cycle nominal comportant N adsorbeurs en programmant dès l'origine un cycle fonctionnant avec N-1 adsorbeurs avec la possibilité d'isoler de l'unité l'adsorbeur défaillant, c'est-à-dire en pratique de pouvoir isoler les N adsorbeurs indépendamment. En fait, à partir de 6 adsorbeurs, la solution retenue a été de fractionner les N adsorbeurs en groupes isolables de n adsorbeurs et de prévoir des cycles de substitution fonctionnant donc avec N-n, éventuellement N-2n ou N-3n, etc. adsorbeurs. Il s'agit là d'un compromis entre performances, complexité des cycles et investissement. Généralement, il a été retenu n=2, à savoir que les N adsorbeurs sont regroupés 2 par 2 en N/2 paires. Dans ce cas, le nombre N d'adsorbeurs doit être pair et cette solution est privilégiée pour des PSA comportant 6, 8, 10, 12, 14, 16, etc. adsorbeurs. Pour des unités comportant un nombre d'adsorbeurs multiple de 3, par exemple 9, 12, 15, 18, 21, etc. adsorbeurs, on peut regrouper les adsorbeurs par groupes de 3 adsorbeurs chacun et prévoir par exemple pour un cycle nominal fonctionnant avec 21 adsorbeurs, des cycles de substitution correspondant à 18, 15 et 12 adsorbeurs en fonctionnement.

On a cité ici le découpage des N adsorbeurs en paire ou en triplet mais on peut concevoir d'aller au-delà si dans le futur on développait des unités PSA comportant un très grand nombre d'adsorbeurs. Cela pourrait être le cas par exemple pour des URPSA (Ultra Rapid PSA) comprenant une multitude d'adsorbeurs de petite taille.

Avec ce type d'arrangement, on est conduit à isoler fluidiquement de l'unité, un groupe (par exemple, une paire ou un triplet d'adsorbeurs), lorsqu'une défaillance est détectée au niveau d'au moins un adsorbeur de la paire ou du triplet, par exemple une fuite de gaz, une défaillance d'une vanne ou de l'instrumentation. Par isolation fluidique, on veut signifier par exemple que cet adsorbeur n'échange alors aucun flux de matière avec le reste de l'unité, et ce, quelle que soit l'étape du cycle de pression. Cette isolation est réalisée généralement au moyen de vannes d'isolation communes au groupe (par exemple, à la paire ou au triplet).

Lorsqu'un groupe (par exemple, une paire ou un triplet) d'adsorbeurs est isolé fluidiquement, il est alors possible de paramétrer l'unité (en réalité, le dispositif de commande) de sorte qu'elle fonctionne sur la base d'un nombre réduit d'adsorbeurs (par exemple, respectivement N-2 ou N-3). Des cycles de substitution comportant moins d'adsorbeurs que le cycle nominal sont préprogrammés dans le dispositif de commande au même titre que le cycle nominal.

On pourra noter que pour les unités les plus modernes, la détection de certaines défaillances peut se faire automatiquement ainsi que le passage du cycle nominal au cycle de substitution avec un nombre réduit d'adsorbeurs.

Un problème peut apparaître lorsqu'un autre adsorbeur, appartenant à un autre groupe (par exemple, à une autre paire ou un autre triplet), devient défectueux.

L'isolation de cette autre groupe nécessite de paramétrer l'unité pour fonctionner par exemple sur la base de N-4 (dans le cas où les groupes sont des paires d'adsorbeurs) ou N-6 (dans le cas où les groupes sont des triplet d'adsorbeurs) adsorbeurs, si un tel fonctionnement est encore possible.

Le rendement de cette unité est alors très fortement réduit.

Dans le cas où un tel fonctionnement (ici, par exemple à N-4 ou N-6 adsorbeurs) n'est pas possible ou n'a pas été prévu, il faut alors arrêter l'unité.

Ces situations ne sont pas satisfaisantes alors qu'en pratique, il existe des adsorbeurs de l'unité, à savoir dans les deux exemples considérés, un adsorbeur dans chaque paire isolée, ou deux adsorbeurs dans chaque triplet isolé, qui se retrouvent inexploités bien qu'ils soient en parfait état de fonctionnement.

La présente invention vise à remédier efficacement à ces inconvénients en proposant un procédé de gestion d'une unité de traitement d'un gaz par adsorption à modulation de pression, l'unité comportant :
- au moins N adsorbeurs, N étant un nombre supérieur ou égal à 6, les N adsorbeurs étant agencés en G groupes comportant chacun n=N/G adsorbeurs, n étant un entier supérieur ou égal à 2, chaque adsorbeur comportant un moyen d'instrumentation,
- un dispositif de commande permettant à l'unité de fonctionner sélectivement selon un cycle nominal à N adsorbeurs et selon un cycle dégradé, le cycle dégradé excluant au moins un groupe par rapport au cycle nominal,
- une pluralité de liaisons pour l'accès du dispositif de commande au moyen d'instrumentation de chaque adsorbeur,
   caractérisé en ce que lorsqu'un premier groupe et un deuxième groupe comportent chacun au moins un adsorbeur opérationnel et au moins un adsorbeur défaillant et lorsque ces premier et deuxième groupes comportent à eux deux, au moins n adsorbeurs opérationnels, ledit procédé comprend alors les étapes de :
   - a) arrêter l'unité,
   - b) isoler fluidiquement de l'unité, les adsorbeurs défaillants,
   - c) configurer les liaisons de sorte à intervertir les moyens d'instrumentation de l'adsorbeur défaillant du premier groupe avec les moyens d'instrumentation de l'adsorbeur opérationnel du deuxième groupe, de sorte que le premier groupe comporte à nouveau, vis-à-vis du dispositif de commande, n adsorbeurs opérationnels,
   - d) paramétrer le dispositif de commande de sorte qu'il commande l'unité selon le cycle dégradé, en excluant le deuxième groupe.

L'invention permet ainsi d'optimiser le procédé de production d'un gaz d'une unité de traitement par adsorption à modulation de pression, lorsque deux adsorbeurs appartenant à deux groupes distincts sont défectueux. Par exemple lorsque deux adsorbeurs appartenant à deux paires distinctes sont défectueux ou lorsqu'au maximum trois adsorbeurs appartenant à deux triplets sont défectueux.

Selon une réalisation, le moyen d'instrumentation est agencé pour permettre la mesure d'une information relative à une grandeur physique et/ou la commande d'un actionneur d'une vanne.

Selon une réalisation, le procédé comporte l'étape e) de mettre en communication fluidique avec l'unité, chaque adsorbeur participant au cycle dégradé.

Selon une réalisation, l'unité comporte au moins une vanne d'isolation pour permettre sélectivement d'isoler fluidiquement et de mettre en communication fluidique, au moins un adsorbeur vis-à-vis de l'unité ou au moins un groupe vis-à-vis de l'unité.

Selon une réalisation, la vanne d'isolation comporte une vanne d'isolation d'un groupe vis-à-vis de l'unité

Selon une réalisation, la vanne d'isolation comporte une vanne d'isolation d'un adsorbeur vis-à-vis de l'unité.

Selon une réalisation, chaque groupe est agencé pour être isolé sélectivement, de sorte que l'isolation d'un groupe permette l'isolation fluidique simultanée des n adsorbeurs du groupe par rapport au reste de l'unité.

Selon une réalisation, l'unité comporte une pluralité de vannes de cycle, pour contrôler le cycle de pression de chaque adsorbeur, chaque vanne de cycle étant notamment distincte de la vanne d'isolation.

Selon une réalisation, le moyen d'instrumentation comporte au moins un capteur et/ ou une robinetterie.

Selon une réalisation, le capteur comporte un capteur de pression et/ou de pression différentielle et/ou de température.

Selon une réalisation, le moyens d'instrumentation comporte une commande d'une vanne.

Selon une réalisation, l'unité comporte entre 6 et 24 adsorbeurs.

Selon une réalisation, l'unité est agencée pour produire du dihydrogène ou du dioxyde de carbone.

L'invention concerne en outre une unité de traitement d'un gaz par adsorption à modulation de pression, l'unité comportant :
- au moins N adsorbeurs, N étant un nombre supérieur ou égal à 6, les N adsorbeurs étant agencés en G groupes comportant chacun n=N/G adsorbeurs, n étant un entier supérieur ou égal à 2, chaque adsorbeur comportant un moyen d'instrumentation,
- un dispositif de commande permettant à l'unité de fonctionner sélectivement selon un cycle nominal à N adsorbeurs et selon un cycle dégradé, le cycle dégradé excluant au moins un groupe par rapport au cycle nominal,
- une pluralité de liaisons pour l'accès du dispositif de commande au moyen d'instrumentation de chaque adsorbeur,
   le dispositif de commande comportant un microprocesseur agencé pour la mise en œuvre des étapes a) à d) du procédé tel que décrit ci-dessus.

En d'autres termes, le microprocesseur est agencé pour la mise en œuvre de chacune des étapes a) à d) du procédé tel que décrit ci-dessus.

Selon une réalisation, le microprocesseur est en outre agencé pour la mise en œuvre de l'étape e) du procédé tel que décrit ci-dessus.

Selon une réalisation, les liaisons sont configurées pour pouvoir être interchangeables, notamment entre un adsorbeur défaillant d'un groupe et un adsorbeur opérationnel d'un autre groupe.

L'ensemble des caractéristiques décrites ci-dessus sont applicables seules ou en combinaison avec cette dernière invention.

L'invention concerne en outre un produit programme d'ordinateur comportant des instructions qui conduisent l'unité telle que décrite ci-dessus à exécuter les étapes a) à d) du procédé tel que décrit ci-dessus, lorsque le programme est exécuté par le microprocesseur.

Selon une réalisation, le produit programme d'ordinateur comporte des instructions qui conduisent l'unité telle que décrite ci-dessus à exécuter l'étape e) du procédé tel que décrit ci-dessus, lorsque le programme est exécuté par le microprocesseur.

L'invention concerne enfin une unité de traitement d'un gaz par adsorption à modulation de pression, l'unité comportant :
- au moins N adsorbeurs, N étant un nombre supérieur ou égal à 6, les N adsorbeurs étant agencés en G groupes comportant chacun n=N/G adsorbeurs, n étant un entier supérieur ou égal à 2, chaque adsorbeur comportant un moyen d'instrumentation,
- un dispositif de commande permettant à l'unité de fonctionner sélectivement selon un cycle nominal à N adsorbeurs et selon un cycle dégradé, le cycle dégradé excluant au moins un groupe par rapport au cycle nominal,
- une pluralité de liaisons pour l'accès du dispositif de commande au moyen d'instrumentation de chaque adsorbeur,
   l'unité étant configurée par le dispositif de commande pour être dans le cycle dégradé,
   l'unité comportant un premier groupe et un deuxième groupe comportant chacun au moins un adsorbeur opérationnel et au moins un adsorbeur défaillant,
   l'ensemble des adsorbeurs participant au cycle dégradé étant en communication fluidique avec l'unité et l'ensemble des adsorbeurs défaillants étant isolés fluidiquement de l'unité.

Selon une réalisation, les liaisons entre un adsorbeur défaillant d'un groupe et un adsorbeur opérationnel d'un autre groupe sont échangées.

L'invention sera mieux comprise à la lecture de la description qui suit et à l'examen des figures qui l'accompagnent. Ces figures ne sont données qu'à titre illustratif mais nullement limitatif de l'invention. En particulier, elles ne décrivent que le cas où les adsorbeurs de l'unité sont agencés par groupe de deux adsorbeur (c'est-à-dire, par paire), mais le même principe pourrait s'appliquer si les adsorbeurs étaient regroupés par triplets, quadruplets, etc...
[Fig.1] La [Fig.1] est une représentation schématique d'une unité PSA dans laquelle le procédé selon l'invention est mis en œuvre ;
[Fig.2] La [Fig.2] est une représentation schématique de l'unité PSA de la [Fig.1], dans laquelle un groupe est isolé de l'unité via sa vanne d'isolation ;
[Fig.3] La [Fig.3] est une représentation schématique de l'unité PSA de la [Fig.2], dans laquelle un adsorbeur d'un autre groupe est non opérationnel ;
[Fig.4] La [Fig.4] est une représentation schématique de l'unité PSA de la [Fig.3], mettant en œuvre le procédé selon l'invention.
[Fig.5] La [Fig.5] est une représentation schématique de la permutation des liaisons entre un adsorbeur et le dispositif de commande pour remplacer un adsorbeur non opérationnel par un adsorbeur opérationnel dans une paire.

Il convient dans un premier temps, de préciser les termes employés pour qualifier l'état d'un adsorbeur ainsi que ce que l'on peut comprendre par intervertir (ou permuter) les moyens d'instrumentation entre deux adsorbeurs.

Ainsi on dit qu'un adsorbeur (pris au sens large c'est-à-dire avec ses équipements, notamment les vannes et les moyens d'instrumentation qui lui sont directement rattachés) est opérationnel si son état lui permet d'être intégré au cycle suivi par l'unité. Un adsorbeur opérationnel participe généralement au fonctionnement de l'unité mais il peut être également non utilisé ou inexploité et dans ce cas il se trouve isolé de l'unité. Il reste néanmoins disponible pour être intégré au cycle de l'unité en cas de besoin.

A l'inverse, un adsorbeur sera non opérationnel si son état ne permet pas de l'intégrer au cycle. On le qualifie alors d'adsorbeur défaillant ou défectueux.

Un adsorbeur, qu'il soit défaillant ou simplement inutilisé, va généralement être isolé du reste de l'unité. Cette isolation peut se faire :
- au moyen d'une vanne d'isolation relative au groupe auquel il appartient (dans ce cas, les autres adsorbeurs appartenant à ce même groupe sont également isolés de l'unité) ; ou
- au moyen de la fermeture de la totalité de ses vannes de cycle ; ou
- par la mise en œuvre de moyens spécifiques d'isolation tels que des brides pleines, des bouchons, un joint à lunette, une vanne manuelle (ces moyens spécifiques sont généralement mis en œuvre pour un arrêt de longue durée ou lors d'une intervention par un opérateur sur l'adsorbeur).

On notera qu'un adsorbeur étant isolé individuellement, c'est à dire par les moyens qui lui sont propres (vannes de cycle, moyens spécifiques), les autres adsorbeurs de son groupe, s'ils sont opérationnels, peuvent être mis en communication fluidique avec l'unité et participer au cycle si ceci est utile, dès lors que la vanne d'isolation relative au groupe en question est ouverte.

Dans certains cas, il se peut que chacun des adsorbeurs d'un groupe possède sa propre vanne d'isolation qui généralement va alors remplacer la vanne d'isolation du groupe. Ainsi, les vannes d'isolation de chaque adsorbeur pourront être commandées simultanément et jouer dans ce cas, le même rôle qu'une vanne d'isolation d'un groupe d'adsorbeurs.

On appelle ainsi, vanne d'isolation, une vanne d'isolation d'un groupe d'adsorbeurs, ou bien une vanne d'isolation d'un adsorbeur en particulier. Une telle vanne d'isolation est distincte d'une vanne de cycle.

Concernant l'inversion des moyens d'instrumentation, les termes employés sont généraux compte tenu de la diversité des liaisons possibles entre l'instrumentation locale liée à un adsorbeur et à proximité immédiate de celui-ci et le dispositif de commande situé en salle de contrôle, ou du moins déporté, qui traite les informations. Un exemple non limitatif de liaison est décrit ci-après.

On sait qu'un capteur mesure une grandeur physique (pression, débit, température...) et que son transmetteur la traduit en une grandeur exploitable, souvent un signal analogique qui peut circuler dans des fils électriques (appelés aussi « câble instrument »). Ces fils arrivent sur les borniers de boîtes de jonctions locales, proches des équipements du site, qui regroupent ainsi les liaisons de plusieurs capteurs. De ces boîtes de jonction locales part un câble d'instrumentation multi-fils qui regroupe toutes les arrivées, par exemple celles d'une douzaine de capteurs. Ces câbles d'instrumentation, dont le nombre est fonction de la complexité de l'unité, cheminent via un chemin de câbles jusqu'à la salle technique de la salle de contrôle et plus précisément jusqu'à l'armoire du PSA. À ce niveau, les fils relatifs aux différents capteurs sont séparés et fixés aux borniers de l'armoire. Ces borniers sont également reliés aux cartes d'entrée/sortie qui transforment les signaux que l'on a supposé de type analogique jusque-là en signaux digitaux utilisés par le dispositif de commande.

Concernant les vannes de cycle, c'est généralement le positionneur de la vanne qui reçoit les informations du dispositif de commande et qui va piloter l'actionneur qui lui-même met en mouvement l'opercule de la vanne via un système mécanique (tige, engrenage...). En retour, il peut transmettre vers le dispositif de commande, la position de la vanne, des alarmes, des informations de fin de course...

On appelle « moyens d'instrumentation », par exemple, le système de transmission d'information entre le site et la salle de contrôle qu'il s'agisse de capteurs ou de vannes de régulation.

Les boîtes de jonction locales peuvent regrouper les fils venant de capteurs de même type, par exemple tous les capteurs de pression ou ceux relatifs aux vannes. On peut aussi regrouper toutes les informations relatives à un adsorbeur. Ces boîtes de jonction peuvent être séparées ou regroupées dans un ou plusieurs tableaux.

On conçoit que l'inversion d'un moyen d'instrumentation entre deux adsorbeurs puissent se faire à différents endroits du circuit de cheminement de l'information : bornier local, bornier de l'armoire technique, cartes d'entrée/sortie, liaison avec le dispositif de commande.

Le choix final dépend de la configuration de chaque système. On notera que le regroupement des informations par adsorbeur peut faciliter cette inversion.

On a sommairement décrit ci-dessus le cas le plus répandu de liaisons analogiques. Les signaux peuvent être transmis aussi de façon numérique ou par des réseaux sans fil. Il est toujours possible d'intervertir les signaux de deux adsorbeurs en adaptant la procédure à la technologie utilisée.

Dans tous les cas, le résultat sera que le dispositif de commande, via dans son programme, recevra des informations d'un adsorbeur donné (en réalité non opérationnel) et transmettra des ordres et consignes à cet adsorbeur, alors qu'il contrôlera en pratique un autre adsorbeur de l'unité.

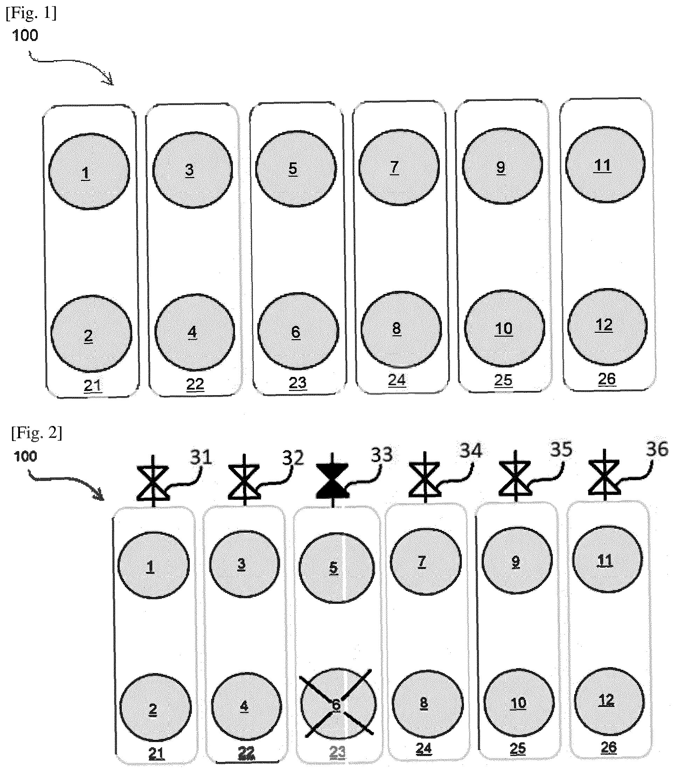

En référence à la [Fig.1], on a représenté une unité PSA 100 mettant en œuvre N = 12 adsorbeurs 1-12. Cette unité PSA 100 est configurée de sorte à comporter 6 groupes (ici des paires) 21-26 d'adsorbeurs (la paire 21 comportant les adsorbeurs 1 et 2, la paire 22 comportant les adsorbeurs 3 et 4, etc...). Chaque paire 21-26 de l'unité PSA 100 est agencée pour être isolée sélectivement, de sorte que l'isolation d'une paire 21-26 permette l'isolation fluidique des deux adsorbeurs de la paire, par rapport à l'unité 100. Plus précisément, chaque paire 21-26 peut être isolée vis-à-vis du reste de l'unité 100 par une vanne d'isolation 31-36. Dans l'exemple représenté, chaque vanne d'isolation 31-36 est une vanne d'isolation du groupe par rapport à l'unité, c'est-à-dire qu'elle permet d'isoler l'ensemble des adsorbeurs du groupe par rapport à l'unité.

Le choix de regrouper les adsorbeurs 1-12 par groupes (ici, par paires) 21-26 pour l'isolation d'au moins un adsorbeur 1-12 de l'unité est comme on l'a expliqué un compromis entre la souplesse d'utilisation et la complexité des installations techniques de l'unité PSA 100.

L'unité 100 comporte en outre une pluralité de vannes de cycle et un dispositif de commande 200 pour commander les vannes de cycle afin d'assurer le cycle de pression. Chaque adsorbeur 1-12 est ainsi commandé par des vannes de cycle qui lui sont attachées.

L'unité 100 comporte en outre une pluralité de liaisons 45, 47, 48 pour l'accès à des moyens d'instrumentation de chaque adsorbeur 1-12.

Plus précisément, ces liaisons 45, 47, 48, comportent des câbles électriques, reliant les moyens d'instrumentation de chaque adsorbeur 1-12 au dispositif de commande 200.

Les moyens d'instrumentation comportent par exemple des capteurs de pression et des commutateurs de vannes de cycle. Par commutateurs, on entend ici tout moyen propre à une vanne qui permet son contrôle et sa commande durant chaque étape du cycle.

Ainsi, le dispositif de commande 200 peut lire les informations délivrées par les capteurs et commander les vannes de cycle de chaque adsorbeur 1-12.

La [Fig.2] représente la même unité que celle de la [Fig.1], mais fonctionnant selon un cycle mettant en œuvre 10 adsorbeurs seulement, la paire 23 ayant été sortie du cycle suite à un dysfonctionnement de l'adsorbeur 6.

Ce type de fonctionnement a été prévu dès la conception de l'unité et le passage de 12 à 10 adsorbeurs a pu se faire automatiquement. Les adsorbeurs 5 et 6 se trouvent isolés du reste de l'unité 100 car le groupe qui est constitué de ces deux adsorbeur 5 et 6 a été isolé par l'intermédiaire d'une vanne d'isolation du groupe. En variante, l'isolation peut se faire via les vannes d'isolation de chaque adsorbeur.

On a représenté symboliquement les vannes d'isolation 31-36 permettant d'isoler respectivement chacun des groupes (ici, chacune des paires) 21-26. Sur la [Fig.2], la vanne d'isolation 33 est fermée et isole les adsorbeurs 5 et 6 de l'unité.

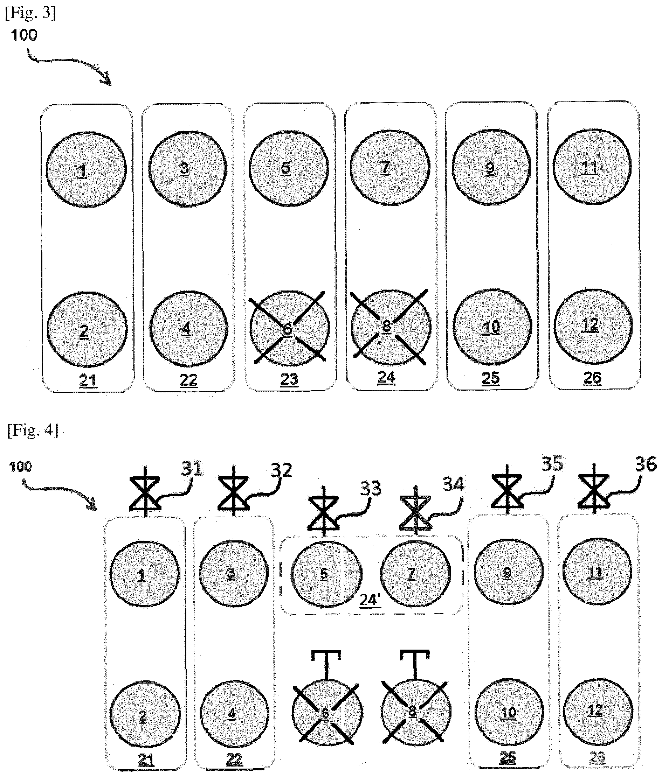

Alors que l'on fonctionne dans cette configuration, un second adsorbeur (à savoir l'adsorbeur 8 de la paire 24, dans l'exemple représenté à la [Fig.3]) présente une défaillance. Cette nouvelle situation est représentée sur la [Fig.3]. Si l'unité n'a pas été conçue pour fonctionner avec deux groupes en moins (ici, deux paires en moins), soit l'unité PSA détecte le défaut et s'arrête automatiquement, soit il convient d'arrêter manuellement l'unité PSA.

Si au contraire l'unité a été conçue pour fonctionner avec seulement 8 adsorbeurs, elle pourrait fonctionner selon ce dernier cycle mais avec des performances très fortement dégradées.

Aucune de ces solutions n'est satisfaisante, surtout si la remise en état d'au moins un des deux adsorbeurs non opérationnels demande un temps d'intervention important.

Le procédé selon l'invention va alors consister à intervertir les moyens d'instrumentation de l'adsorbeur défaillant 8 avec ceux de l'adsorbeur opérationnel 5 au niveau du dispositif de commande 200 afin de former une nouvelle paire 24 opérationnelle. Le dispositif de commande 200 commandera ainsi en pratique l'adsorbeur 5 en lieu et place de l'adsorbeur 8 sans avoir à intervenir dans la programmation des cycles, ni à déplacer physiquement des tuyauteries. En d'autres termes, le dispositif de commande 200, croyant commander l'adsorbeur 8, commandera en réalité l'adsorbeur 5.

La [Fig.4] symbolise cette nouvelle configuration dans laquelle la paire 24 existe toujours pour le dispositif de commande 200 mais comprend à présent l'adsorbeur 5 à la place de l'adsorbeur 8.

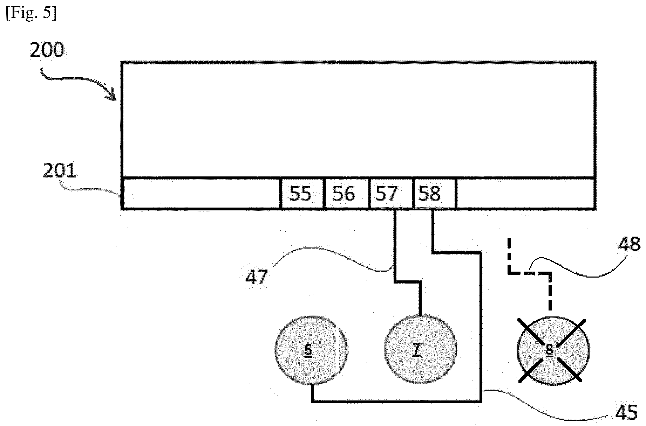

La [Fig.5] représente schématiquement le dispositif de commande 200, les liaisons 45, 47, 48 entre respectivement les adsorbeurs 5, 7, 8 et les entrées/sorties correspondantes 55, 57, 58 situées sur une des faces 201 du dispositif de commande 200.

Les entrées/sorties 55, 56 correspondent à la paire 23, alors que les entrées/sorties 57, 58 correspondent à la paire 24. En débranchant la liaison 48 et en la remplaçant par la liaison 45, le dispositif de commande 200 commandera le cycle de pression de l'adsorbeur 5 qui a été permuté avec l'adsorbeur 8, de la même façon qu'il commanderait l'adsorbeur 8.

On pourra éventuellement brancher la liaison 48 sur l'entrée/sortie 55 mais la paire 23 étant exclue du cycle, il n'y aura aucune action correspondante.

On a supposé ici que les liaisons se faisaient par câbles électriques. Il pourrait aussi bien s'agir de fibres optiques ou de liaison radio comme par exemple une liaison wifi, bluetooth ou équivalent. Quel que soit le type de liaison, le but est de former un nouveau groupe (la paire 24 dans l'exemple de la [Fig.5]) qui peut être commandé par le dispositif de commande 200 sans nécessiter de modifier la programmation du dispositif de commande 200 ou les tuyauteries. À la place, on utilise les entrées/sorties (48, dans l'exemple de la [Fig.5]) normalement dédiées à un adsorbeur défaillant (8, dans l'exemple de la [Fig.5]) pour un autre adsorbeur fonctionnel de l'unité 100 (5, dans l'exemple de la [Fig.5]).

Cette isolation se fait en respectant les règles de sécurité propres aux sites, en fonction des pressions en jeu et des constituants présents dans les adsorbeurs.

On peut utiliser des joints à lunette, des brides pleines ou des bouchons.

Les adsorbeurs isolés peuvent être dépressurisés, purgés ou inertés selon le cas.

Le redémarrage lui-même peut comporter des étapes de pressurisation préalables au passage en automatique. Il peut alors être nécessaire auparavant, de forcer ouvertes les vannes d'isolation 33 et 34 respectivement des paires 23 et 24.

La méthode préconisée ici nécessite d'effectuer des modifications de branchement d'instrumentation pouvant porter par exemple, suivant l'unité PSA, sur deux à cinq vannes, ou sur un ou deux capteurs de pression ou de pression différentielle, ou encore sur un capteur de température.

On notera enfin que l'agencement des adsorbeurs par groupe est à la fois un agencement physique et logique. Ainsi par exemple, deux adsorbeurs d'un groupe particulier, auront leur tuyauteries d'entrée/sortie, reliées à des collecteurs spécifiques et ces collecteurs comporteront des vannes d'isolation propres. Le dispositif de commande est de son côté, en mesure de commander deux adsorbeurs d'un groupe donné et de distinguer un groupe des autres groupes d'adsorbeurs.

## Revendications

1. Procédé de gestion d'une unité (100) de traitement d'un gaz par adsorption à modulation de pression, l'unité (100) comportant :
- au moins N adsorbeurs (1-12), N étant un nombre supérieur ou égal à 6, les N adsorbeurs étant agencés en G groupes (21-26) comportant chacun n=N/G adsorbeurs, n étant un entier supérieur ou égal à 2, chaque adsorbeur (1-12) comportant un moyen d'instrumentation,
- un dispositif de commande (200) permettant à l'unité (100) de fonctionner sélectivement selon un cycle nominal à N adsorbeurs et selon un cycle dégradé, le cycle dégradé excluant au moins un groupe (21-26) par rapport au cycle nominal,
- une pluralité de liaisons (45, 47, 48) pour l'accès du dispositif de commande (200) au moyen d'instrumentation de chaque adsorbeur (1-12),
**caractérisé en ce que** lorsqu'un premier groupe (G1) et un deuxième groupe (G2) comportent chacun au moins un adsorbeur (1-12) opérationnel et au moins un adsorbeur (6,8) défaillant et lorsque ces premier (G1) et deuxième (G2) groupes comportent à eux deux, au moins n adsorbeurs opérationnels, ledit procédé comprend alors les étapes de :
- a) arrêter l'unité (100),
- b) isoler fluidiquement de l'unité (100), les adsorbeurs (1-12) défaillants,
- c) configurer les liaisons (45, 47, 48) de sorte à intervertir les moyens d'instrumentation de l'adsorbeur défaillant du premier groupe (G1) avec les moyens d'instrumentation de l'adsorbeur opérationnel du deuxième groupe (G2), de sorte que le premier groupe (G1) comporte à nouveau, vis-à-vis du dispositif de commande (200), n adsorbeurs opérationnels,
- d) paramétrer le dispositif de commande (200) de sorte qu'il commande l'unité (100) selon le cycle dégradé, en excluant le deuxième groupe (G2).

2. Procédé selon la revendication précédente, comportant l'étape de :
- e) mettre en communication fluidique avec l'unité (100), chaque adsorbeur (1-12) participant au cycle dégradé.

3. Procédé selon l'une des revendications précédentes, l'unité (100) comportant au moins une vanne d'isolation (31-36) pour permettre sélectivement d'isoler fluidiquement et de mettre en communication fluidique, au moins un adsorbeur vis-à-vis de l'unité (100) ou au moins un groupe vis-à-vis de l'unité (100).

4. Procédé selon la revendication précédente, l'unité (100) comportant une pluralité de vannes de cycle, pour contrôler le cycle de pression de chaque adsorbeur (1-12), chaque vanne de cycle étant notamment distincte de la vanne d'isolation (31-36).

5. Unité (100) de traitement d'un gaz par adsorption à modulation de pression, l'unité (100) comportant :
- au moins N adsorbeurs (1-12), N étant un nombre supérieur ou égal à 6, les N adsorbeurs étant agencés en G groupes (21-26) comportant chacun n=N/G adsorbeurs, n étant un entier supérieur ou égal à 2, chaque adsorbeur (1-12) comportant un moyen d'instrumentation,
- un dispositif de commande (200) permettant à l'unité (100) de fonctionner sélectivement selon un cycle nominal à N adsorbeurs et selon un cycle dégradé, le cycle dégradé excluant au moins un groupe (21-26) par rapport au cycle nominal,
- une pluralité de liaisons (45, 47, 48) pour l'accès du dispositif de commande (200) au moyen d'instrumentation de chaque adsorbeur (1-12),
le dispositif de commande (200) comportant un microprocesseur agencé pour la mise en œuvre des étapes du procédé selon l'une des revendications précédentes.

6. Unité (100) selon la revendication 5, **caractérisée en ce que** les liaisons (45, 47, 48) sont configurées pour pouvoir être interchangeables, notamment entre un adsorbeur défaillant d'un groupe et un adsorbeur opérationnel d'un autre groupe.

7. Produit programme d'ordinateur comportant des instructions qui conduisent l'unité (100) selon la revendication 5 ou 6 à exécuter les étapes du procédé selon l'une des revendications 1 à 4, lorsque le programme est exécuté par le microprocesseur.

## Patentansprüche

1. Verfahren zur Verwaltung eines Ausfalls einer Gasbehandlungseinheit (100) durch Druckwechseladsorption, wobei die Einheit (100) umfasst: mindestens N Adsorber (1-12), wobei N eine Zahl größer oder gleich 6 ist, wobei die N Adsorber in G Gruppen (21-26) angeordnet sind, die jeweils n=N/G Adsorber umfassen, wobei n eine ganze Zahl größer oder gleich 2 ist, wobei jeder Adsorber (1-12) eine Instrumentierungseinrichtung umfasst, eine Steuervorrichtung (200), die es der Einheit (100) ermöglicht, selektiv nach einem Nennzyklus mit N Adsorbern und nach einem degradierten Zyklus zu arbeiten, wobei der degradierte Zyklus mindestens eine Gruppe (21-26) gegenüber dem Nennzyklus ausschließt, eine Vielzahl von Verbindungen (45, 47, 48) für den Zugriff der Steuervorrichtung (200) auf die Instrumentierungseinrichtung jedes Adsorbers (1-12), **dadurch gekennzeichnet, dass**, wenn eine erste Gruppe (G1) und eine zweite Gruppe (G2) jeweils mindestens einen betriebsbereiten Adsorber (1-12) und mindestens einen defekten Adsorber (6,8) umfassen und wenn diese erste (G1) und zweite (G2) Gruppe zusammen mindestens n betriebsbereite Adsorber umfassen, das genannte Verfahren dann die folgenden Schritte umfasst:
a) Anhalten der Einheit (100),
b) fluides Isolieren der defekten Adsorber (1-12) von der Einheit (100),
c) Konfigurieren der Verbindungen (45, 47, 48), um die Instrumentierungseinrichtungen des defekten Adsorbers der ersten Gruppe (G1) mit den Instrumentierungseinrichtungen des betriebsbereiten Adsorbers der zweiten Gruppe (G2) zu vertauschen, so dass die erste Gruppe (G1) gegenüber der Steuervorrichtung (200) wieder n betriebsbereite Adsorber umfasst,
d) Parametrieren der Steuervorrichtung (200), so dass sie die Einheit (100) gemäß dem degradierten Zyklus steuert, indem sie die zweite Gruppe (G2) ausschließt.

2. Verfahren nach dem vorhergehenden Anspruch, umfassend den Schritt: e) Herstellen einer Fluidverbindung mit der Einheit (100) für jeden Adsorber (1-12), der am degradierten Zyklus teilnimmt.

3. Verfahren nach einem der vorhergehenden Ansprüche, wobei die Einheit (100) mindestens ein Absperrventil (31-36) umfasst, um selektiv die fluidische Trennung und das Herstellen einer Fluidverbindung von mindestens einem Adsorber gegenüber der Einheit (100) oder mindestens einer Gruppe gegenüber der Einheit (100) zu ermöglichen.

4. Verfahren nach dem vorhergehenden Anspruch, wobei die Einheit (100) eine Vielzahl von Zyklusventilen zur Steuerung des Druckzyklus jedes Adsorbers (1-12) umfasst, wobei jedes Zyklusventil insbesondere von dem Absperrventil (31-36) verschieden ist.

5. Einheit (100) zur Behandlung eines Gases durch Druckwechseladsorption, wobei die Einheit (100) umfasst:
mindestens N Adsorber (1-12), wobei N eine Zahl größer oder gleich 6 ist, wobei die N Adsorber in G Gruppen (21-26) angeordnet sind, die jeweils n=N/G Adsorber umfassen, wobei n eine ganze Zahl größer oder gleich 2 ist, wobei jeder Adsorber (1-12) eine Instrumentierungseinrichtung umfasst, eine Steuervorrichtung (200), die es der Einheit (100) ermöglicht, selektiv nach einem Nennzyklus mit N Adsorbern und nach einem degradierten Zyklus zu arbeiten, wobei der degradierte Zyklus mindestens eine Gruppe (21-26) gegenüber dem Nennzyklus ausschließt, eine Vielzahl von Verbindungen (45, 47, 48) für den Zugriff der Steuervorrichtung (200) auf die Instrumentierungseinrichtung jedes Adsorbers (1-12), wobei die Steuervorrichtung (200) einen Mikroprozessor umfasst, der dazu eingerichtet ist, die Schritte des Verfahrens nach einem der vorhergehenden Ansprüche auszuführen.

6. Einheit (100) nach Anspruch 5, **dadurch gekennzeichnet, dass** die Verbindungen (45, 47, 48) so konfiguriert sind, dass sie austauschbar sind, insbesondere zwischen einem defekten Adsorber einer Gruppe und einem betriebsbereiten Adsorber einer anderen Gruppe.

7. Computerprogrammprodukt, das Anweisungen umfasst, die die Einheit (100) nach Anspruch 5 oder 6 veranlassen, die Schritte des Verfahrens nach einem der Ansprüche 1 bis 4 auszuführen, wenn das Programm von dem Mikroprozessor ausgeführt wird.

## Claims

1. A method for managing a failure of a gas treatment unit (100) by pressure swing adsorption, the unit (100) comprising: at least N adsorbers (1-12), N being a number greater than or equal to 6, the N adsorbers being arranged in G groups (21-26) each comprising n=N/G adsorbers, n being an integer greater than or equal to 2, each adsorber (1-12) comprising an instrumentation means, a control device (200) allowing the unit (100) to operate selectively according to a nominal cycle with N adsorbers and according to a degraded cycle, the degraded cycle excluding at least one group (21-26) with respect to the nominal cycle, a plurality of links (45, 47, 48) for access by the control device (200) to the instrumentation means of each adsorber (1-12), **characterized in that** when a first group (G1) and a second group (G2) each comprise at least one operational adsorber (1-12) and at least one faulty adsorber (6,8) and when these first (G1) and second (G2) groups together comprise at least n operational adsorbers, said method then comprises the steps of:
a) stopping the unit (100),
b) fluidically isolating the faulty adsorbers (1-12) from the unit (100),
c) configuring the links (45, 47, 48) so as to swap the instrumentation means of the faulty adsorber of the first group (G1) with the instrumentation means of the operational adsorber of the second group (G2), so that the first group (G1) again comprises, with respect to the control device (200), n operational adsorbers,
d) parameterizing the control device (200) so that it controls the unit (100) according to the degraded cycle, by excluding the second group (G2).

2. The method according to the preceding claim, comprising the step of: e) placing in fluid communication with the unit (100) each adsorber (1-12) participating in the degraded cycle.

3. The method according to one of the preceding claims, the unit (100) comprising at least one isolation valve (31-36) to selectively allow fluidic isolation and placement in fluid communication of at least one adsorber with respect to the unit (100) or at least one group with respect to the unit (100).

4. The method according to the preceding claim, the unit (100) comprising a plurality of cycle valves to control the pressure cycle of each adsorber (1-12), each cycle valve being notably distinct from the isolation valve (31-36).

5. A gas treatment unit (100) by pressure swing adsorption, the unit (100) comprising: at least N adsorbers (1-12), N being a number greater than or equal to 6, the N adsorbers being arranged in G groups (21-26) each comprising n=N/G adsorbers, n being an integer greater than or equal to 2, each adsorber (1-12) comprising an instrumentation means, a control device (200) allowing the unit (100) to operate selectively according to a nominal cycle with N adsorbers and according to a degraded cycle, the degraded cycle excluding at least one group (21-26) with respect to the nominal cycle, a plurality of links (45, 47, 48) for access by the control device (200) to the instrumentation means of each adsorber (1-12), the control device (200) comprising a microprocessor configured to implement the steps of the method according to one of the preceding claims.

6. The unit (100) according to claim 5, **characterized in that** the links (45, 47, 48) are configured to be interchangeable, notably between a faulty adsorber of one group and an operational adsorber of another group.

7. A computer program product comprising instructions which cause the unit (100) according to claim 5 or 6 to execute the steps of the method according to one of claims 1 to 4, when the program is executed by the microprocessor.
